# EUROPÄISCHE PATENTANMELDUNG

(11) **EP 2 085 210 A2**
(43) Veröffentlichungstag der Anmeldung: **05.08.2009**
(21) Anmeldenummer: 08019794.0
(22) Anmeldetag: 13.11.2008
(51) Int. Cl.: B29C 65/48, B29C 65/60

(54) **Verfahren zur Verbindung wenigstens eines ersten Kunststoff-Elements mit wenigstens einem zweiten Kunststoff-Element**

(30) Priorität: 29.01.2008 DE 102008006461
(71) Anmelder: REHAU AG + Co, 95111 Rehau (DE)
(72) Erfinder: Weber, Ulrich, 95032 Hof (DE); Hölzel, Markus, 95234 Sparneck (DE)

(57) **Zusammenfassung**

Die Erfindung betrifft ein Verfahren zur Verbindung wenigstens eines ersten KunststoffElements (12) mit wenigstens einem zweiten Kunststoff-Element (14), wobei das erste Kunststoff-Element (12) wenigstens eine erste Anlagefläche (18) und das zweite Kunststoff-Element (14) wenigstens eine zweite Anlagefläche (22) aufweist, und wobei das erste Kunststoff-Element (12) wenigstens eine das erste Kunststoff-Element (12) und die erste Anlagefläche durchdringende Öffnung (16) aufweist, bei dem in einem ersten Schritt die erste Anlagefläche (18) an die zweite Anlagefläche (22) angelegt wird, und bei dem in einem zweiten Schritt in die Öffnung (16) ein Klebstoff (26) eingebracht wird, wobei der Klebstoff (26) nach dem Einbringen eine Klebstoff-Verbindung (24) zwischen dem ersten und dem zweiten Kunststoff-Element (12, 14) bereitstellt. Die Erfindung betrifft ferner eine Baugruppe zur Herstellung eines Kunststoffbauteil (10) gemäß dem erfindungsgemäßen Verfahren.

## Beschreibung

### Hintergrund der Erfindung

Die Erfindung betrifft ein Verfahren zur Verbindung wenigstens eines ersten Kunststoff-Elements mit wenigstens einem zweiten Kunststoff-Element

Insbesondere im Automobilbereich erfolgt die Verbindung von Kunststoff-Elementen, wie beispielsweise von zwei Kunststoff-Schalen zur Bildung von zweischaligen Kunststoffbauteilen, derart, dass zunächst auf eine oder beide Schalen Klebstoff, vorzugsweise Schmelzkleber aufgetragen und die Teile anschließend zusammengefügt und miteinander verpresst werden. Nachfolgend erfolgt die Aushärtung der Verbindung. Alternativ hierzu ist es auch bekannt, die Verbindung mittels einer Schweißnaht herzustellen. Beim Schweißen ist nachteilig, dass sich Abzeichnungen auf der Außenseite der Schalen bilden können, insbesondere eine unerwünschte wellige Struktur. Dies ist sowohl beim bekannten Vibrationsverschweißen als auch bei einer Ultraschallverschweißung der Fall. Ferner sind hohe Wandstärken erforderlich. Bei der bereits erwähnten Verklebung gemäß dem Stand der Technik ist nachteilig, dass ein vergleichsweise großer Klebstoffverbrauch erforderlich ist bzw. nur geringe Abzugskräfte erzielt werden können. Ferner ist bei zu lackierenden Bauteilen bzw. Elementen (und Overspray) ein hoher Maskier- und Reinigungsaufwand erforderlich. Schließlich ist auch eine genaue Positionierung der Teile bzw. Elemente vor der Verklebung nicht möglich.

### Zugrundeliegende Aufgabe

Der Erfindung liegt daher die Aufgabe zugrunde, ein Verfahren zur Verbindung wenigstens eines ersten Kunststoff-Elements mit wenigstens einem zweiten Kunststoff-Element anzugeben, das gegenüber bekannten Lösungen praktischer und deutlich weniger aufwendig ist, und mit dem insbesondere der Klebstoffverbrauch deutlich reduziert werden kann.

### Erfindungsgemäße Lösung

Diese Aufgabe ist erfindungsgemäß mit einem Verfahren zur Verbindung wenigstens eines ersten Kunststoff-Elements mit wenigstens einem zweiten Kunststoff-Element gelöst, wobei das erste Kunststoff-Element wenigstens eine erste Anlagefläche und das zweite Kunststoff-Element wenigstens eine zweite Anlagefläche aufweist, und wobei das erste Kunststoff-Element wenigstens eine das erste Kunststoff-Element und die erste Anlagefläche durchdringende Öffnung aufweist, bei dem in einem ersten Schritt die erste Anlagefläche an die zweite Anlagefläche angelegt wird, und bei dem in einem zweiten Schritt in die Öffnung ein Klebstoff eingebracht wird, wobei der Klebstoff nach dem Einbringen einen Kontakt zu dem ersten Kunststoff-Element und der zweiten Anlagefläche aufweist und eine Klebstoff-Verbindung zwischen dem ersten und dem zweiten Kunststoff-Element schafft.

Erfindungsgemäß erfolgt im Unterschied zu bekannten Lösungen erst ein Zusammenfügen der zu verklebenden Kunststoff-Elemente durch Anlegen von ersten Anlageflächen eines ersten Kunststoff-Elements an zugeordneten zweiten Anlageflächen eines zweiten Kunststoff-Elements. Erst nach dem erfindungsgemäßen Zusammenfügen erfolgt eine Verklebung der wenigstens zwei Kunststoff-Elemente durch Einbringen eines Klebstoffs in eine das erste Kunststoff-Element und die erste Anlagefläche durchdringende Öffnung, wobei der Klebstoff derart in die Öffnung eingebracht wird, dass der Klebstoff einen Kontakt zu dem ersten Kunststoff-Element und der zweiten Anlagefläche aufweist, um eine Klebstoff-Verbindung zwischen dem ersten und dem zweiten Kunststoff-Element zu schaffen. Insgesamt betrachtet erfolgt also die Verklebung von Kunststoff-Elementen zur Bildung eines aus den Kunststoff-Elementen bestehenden Kunststoffbauteils durch Einbringen von Klebstoff über wenigstens eine in jeweils einer der miteinander zu verklebenden Kunststoff-Elemente durchgängig ausgebildeten Öffnung, und zwar nach dem Zusammenfügen der Kunststoff-Elemente durch entsprechendes Anlegen der jeweiligen Anlageflächen aneinander, wobei die Kunststoff-Elemente auch unter Spannung zusammenfügt werden können, in Abhängigkeit von der jeweiligen Anwendung.

Im Unterschied zu bekannten Lösungen, bei denen vor dem Zusammenfügen zunächst vorgesehene Klebeflächen vollständig mit Klebstoff bestrichen werden, ist bei der erfindungsgemäßen Lösung der Klebstoffverbrauch deutlich reduziert, da der Klebstoff lediglich in die erfindungsgemäß vorgesehenen Öffnungen einzubringen ist.

Ferner kann der Klebstoff im Unterschied zu dem bekannten Bestreichen von Klebeflächen schnell und ohne großen Aufwand in die jeweiligen erfindungsgemäßen Öffnungen eingebracht werden, so dass ein gezielter Klebstoffauftrag möglich ist, was insbesondere im Hinblick auf eine automatisierte Verklebung der Kunststoff-Elemente von Vorteil ist. Das erfindungsgemäße Verfahren ermöglicht im Unterschied zu bekannten Lösungen vor der Verklebung eine genaue Positionierung der Kunststoff-Elemente relativ zueinander. Ferner ist bei zu lackierenden Kunststoff-Bauteilen bzw. Kunststoff-Elementen der Maskier- und Reinigungsaufwand gegenüber bekannten Lösungen deutlich reduziert.

Das erfindungsgemäße Verfahren eignet sich insbesondere zur Verbindung von Kunststoff-Elementen in Form von Heckspoiler-Elementen, Radverbreitungs-Elementen, Schweller-Elementen oder Türunterkanten-Elementen, wobei allgemein insbesondere jede Art von Schweißverbindung durch eine mittels des erfindungsgemäßen Verfahrens geschaffene Klebstoff-Verbindung ersetzt werden kann, sofern die zu verklebenden Kunststoff-Elemente ein Material aufweisen bzw. aus einem Material bestehen, das zur Verklebung geeignet ist.

Bei einer vorteilhaften Weiterbildung des erfindungsgemäßen Verfahrens wird die Öffnung vollständig mit dem Klebstoff aufgefüllt. So lassen sich erfindungsgemäß sehr hohe Haftungskräfte bereitstellen, einhergehend mit einen sehr hohen Abzugskraft zur Trennung der Kunststoff-Elemente.

Bei einer praktischen Weiterbildung weist das erste Kunststoff-Element wenigstens eine Öffnungseintritts-Fläche auf, von der sich die Öffnung bis hin zur der wenigstens einen ersten Anlagefläche erstreckt, wobei die Öffnung vorzugsweise vollständig mit dem Klebstoff aufgefüllt wird, und wobei ferner nach dem Einbringen des Klebstoffs die Öffnung und ein an die Öffnung angrenzender Bereich der Öffnungseintritts-Fläche mit weiterem Klebstoff bedeckt werden.

Erfindungsgemäß erfolgt also ergänzend zur vorzugsweise vollständigen Auffüllung der erfindungsgemäßen Öffnung ein Aufbringen weiteren Klebstoffs auf die vorzugsweise vollständig mit Klebstoff gefüllte Öffnung und auf einen an die Öffnung angrenzenden Bereich der Öffnungseintritts-Fläche. Auf diese Weise kann im Querschnitt erfindungsgemäß ein zusammenhängender Klebstoffpilz gebildet werden, umfassend den in der Öffnung aufgenommenen Klebstoff und weiteren Klebstoff, aufgebracht auf die gefüllte Öffnung und angrenzend an die Öffnung auf die Öffnungseintritts-Fläche, einhergehend mit einer wesentlichen Erhöhung der Haftungskräfte.

Die erfindungsgemäße Öffnung kann einen kreisförmigen Querschnitt aufweisen oder in Form eines Langlochs ausgebildet sein.

Bei einer besonders praktischen Weiterbildung weist die Öffnung zwei unterschiedlich ausgebildete Abschnitte auf, wobei einer der beiden Abschnitte eine größere Querschnittsfläche aufweist, und wobei sich der Abschnitt mit der größeren Querschnittsfläche vorzugsweise bis zu der ersten Anlagefläche erstreckt. Der Öffnungsabschnitt mit der größeren Querschnittsfläche, der sich vorzugsweise bis zu der Anlagefläche des ersten Kunststoffelements erstreckt, bildet erfindungsgemäß einen Hinterschnitt, so dass neben dem durch den Klebstoff hergestellten Stoffschluss zusätzlich ein Formschluss entsteht, insbesondere wenn die gesamte Öffnung vollständig mit dem Klebstoff ausgefüllt wird. So kann erfindungsgemäß eine hohe Abzugskraft bereitgestellt werden.

Bei einer weiteren praktischen Weiterbildung weist die Öffnung einen Abschnitt auf, der eine sich in Richtung der ersten Anlagefläche zunehmende Querschnittsfläche aufweist, wobei sich der Abschnitt vorzugsweise bis zu der ersten Anlagefläche erstreckt. Mittels dieses Abschnitts, der bevorzugt in Form eines Kegelstumpfs ausgebildet sein kann, kann ergänzend zu dem bestehenden Stoffschluss durch den Klebstoff ein sehr wirksamer Formschluss geschaffen werden, insbesondere wenn die gesamte Öffnung vollständig mit dem Klebstoff ausgefüllt wird.

Alternativ kann die Öffnung eine in Richtung der ersten Anlagefläche zunehmende Querschnittsfläche aufweisen, so dass nicht nur ein Abschnitt der Öffnung, sondern die Öffnung entlang ihrer gesamten Erstreckung eine zunehmende Querschnittsfläche aufweist. Mittels einer derartigen Öffnung, die herstellungstechnisch bzw. fertigungstechnisch einfach und ohne großen Aufwand gebildet werden kann, lassen sich ebenfalls hohe Haftungskräfte bereitstellen.

Die Erfindung betrifft ferner eine Baugruppe zur Bildung eines Kunststoffbauteils, mit wenigstens einem ersten Kunststoff-Element und wenigstens einem zweiten Kunststoff-Element, wobei das erste Kunststoff-Element wenigstens eine erste Anlagefläche und das zweite Kunststoff-Element wenigstens eine zweite Anlagefläche aufweist, und wobei die erste Anlagefläche dafür vorgesehen ist, an die zweite Anlagefläche angelegt zu werden, und wobei das erste Kunststoff-Element wenigstens eine das erste Kunststoff-Element und die erste Anlagefläche durchdringende Öffnung aufweist, in die ein Klebstoff einbringbar ist, wenn die erste Anlagefläche an die zweite Anlagefläche angelegt ist, wobei der Klebstoff nach dem Einbringen einen Kontakt zu dem ersten Kunststoff-Element und der zweiten Anlagefläche aufweist, um zur Bildung des Kunststoffbauteils eine Klebstoff-Verbindung zwischen dem ersten und dem zweiten Kunststoff-Element zu schaffen.

Unter Verwendung der erfindungsgemäßen Baugruppe kann ein Kunststoffbauteil, das wenigstens ein erstes und ein zweites Kunststoff-Element umfasst, vorzugsweise gemäß dem obigen erfindungsgemäßen Verfahren gebildet werden.

Wie oben auch für das erfindungsgemäße Verfahren dargelegt, kann die erfindungsgemäße Öffnung einen kreisförmigen Querschnitt aufweisen oder in Form eines Langlochs ausgebildet sein.

Bei einer praktischen Weiterbildung weist die Öffnung wenigstens zwei unterschiedlich ausgebildete Abschnitte auf, wobei einer der beiden Abschnitte eine größere Querschnittsfläche aufweist, und wobei sich der Abschnitt mit der größeren Querschnittsfläche vorzugsweise bis zu der ersten Anlagefläche erstreckt. Mittels dieser praktischen Weiterbildung kann - wie bereits für das erfindungsgemäße Verfahren dargelegt - durch die zusätzliche Bereitstellung eines Formschlusses eine hohe Abzugskraft geschaffen werden, insbesondere wenn die gesamte Öffnung vollständig mit dem Klebstoff ausgefüllt wird. Dies gilt auch für eine weitere praktische Weiterbildung der erfindungsgemäßen Baugruppe, bei der die Öffnung einen Abschnitt aufweist, der eine sich in Richtung der ersten Anlagefläche zunehmende Querschnittsfläche aufweist, wobei sich der Abschnitt vorzugsweise bis zu der ersten Anlagefläche erstreckt. Dieser Abschnitt, der ebenfalls ergänzend zu dem durch den Klebstoff bereitgestellten Stoffschluss einen sehr wirksamen Formschluss bereitstellt, kann bevorzugt in Form eines Kegelstumpfs ausgebildet sein.

Alternativ kann die Öffnung eine in Richtung der ersten Anlagefläche zunehmende Querschnittsfläche aufweisen, so dass nicht nur ein Abschnitt der Öffnung, sondern die Öffnung entlang ihrer gesamten Erstreckung eine zunehmende Querschnittsfläche aufweist, einhergehend mit den bereits oben dargelegten Vorteilen.

### Kurzbeschreibung der Zeichnungen

Nachfolgend werden Ausführungsbeispiele der Erfindung anhand der beigefügten Zeichnungen näher erläutert. Es zeigt:
- Fig. 1: eine Draufsicht und drei Längsschnitte von drei gemäß dem erfindungsgemäßen Verfahren hergestellten Kunststoffbauteilen, mit Öffnungen in Form von Langlöchern, und
- Fig. 2: eine Draufsicht und drei Längsschnitte von drei gemäß dem erfindungsgemäßen Verfahren hergestellten Kunststoffbauteilen, mit kreiszylinderförmigen Öffnungen bzw. mit Öffnungen mit kreisförmigem Querschnitt und Hinterschnitt.

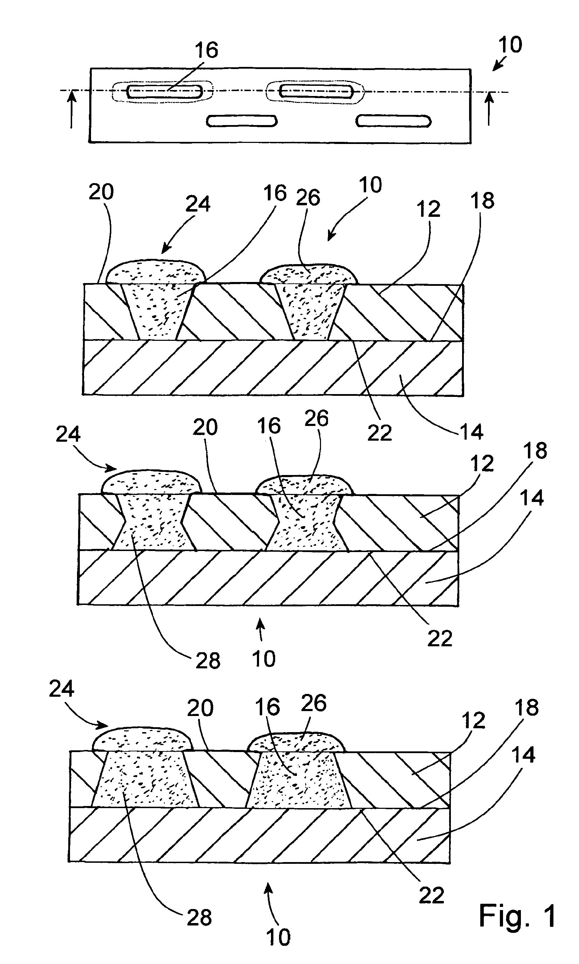

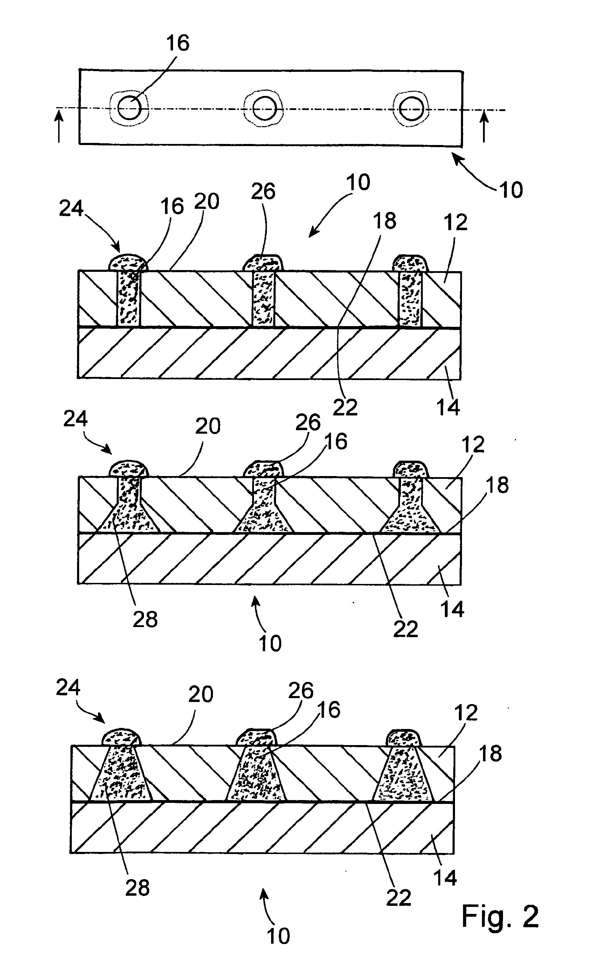

Die in Fig.1 dargestellten Ausführungsbeispiele eines erfindungsgemäßen Kunststoffbauteils 10 sind in Draufsicht identisch ausgebildet und umfassen jeweils eine erstes Kunststoff-Element 12 und ein zweites Kunststoff-Element 14, wobei in dem jeweils ersten Kunststoff-Element 12 Öffnungen 16 in Form von Langlöchern ausgebildet sind, die das erste Kunststoff-Element 12 durchdringen. Die Öffnungen 16 sind in geradlinigen Reihen beabstandet voneinander angeordnet. Die Öffnungen 16 durchdringen jeweils eine erste Anlagefläche 18 und eine Öffnungseintritts-Fläche 20 des ersten Kunststoff-Elements 12. Die zweiten Kunststoff-Elemente 14 weisen jeweils zweite Anlageflächen 22 auf, die jeweils an die ersten Anlageflächen 18 der ersten Kunststoff-Elemente 12 angelegt sind. Die beiden Kunststoff-Elemente 12, 14 sind jeweils über eine erfindungsgemäße Klebstoff-Verbindung 24 miteinander verbunden, die im Querschnitt in Form eines "Klebepilzes" ausgebildet ist, der die Öffnungen 16 vollständig ausfüllt, wobei die Ausdehnung der "Klebstoffpilze" in den Draufsichten von Fig. 1 und Fig. 2 in Form von punktierten Linien veranschaulicht ist.

Die Öffnungen 16 können erfindungsgemäß beispielsweise bereits während einer Spritzgussfertigung der Kunststoff-Elemente 12 in die Kunststoff-Elemente 12 eingearbeitet werden. Die Öffnungen 16 können auch vor der Verbindung der ersten Kunststoff-Elemente 12 mit den zweiten Kunststoff-Elementen 14 in die ersten Kunststoff-Elemente 12 bzw. das erste Kunststoff-Element 12 eingefräst oder auf eine andere bekannte Weise, wie z.B. Drehen eingearbeitet werden.

Bei dem obersten in Fig.1 dargestellten Längsschnitt eines ersten der drei Ausführungsbeispiele der Fig.1 weisen die Öffnungen 16 eine sich in Richtung der ersten Anlagefläche 18 abnehmende Querschnittsfläche auf. Bei dem mittleren in Fig.1 dargestellten Längsschnitt des zweiten Ausführungsbeispiels des erfindungsgemäßen Kunststoffbauteils 10 weisen die Öffnungen 16 einen Abschnitt 28 auf, der eine sich in Richtung der ersten Anlagefläche 18 zunehmende Querschnittsfläche aufweist.

Bei dem in Fig.1 unten dargestellten Längsschnitt des dritten Ausführungsbeispiels des erfindungsgemäßen Kunststoffbauteils 10 weisen die Öffnungen 16 eine in Richtung der ersten Anlagefläche 18 zunehmende Querschnittsfläche auf. Eine so ausgebildete Öffnung kann fertigungstechnisch bzw. herstellungstechnisch einfach gebildet werden und führt zu einer hohen Haftungskraft zwischen den beiden Bauteilen.

Zur Herstellung eines dieser erfindungsgemäßen Kunststoffbauteile 10 aus einer erfindungsgemäßen Baugruppe werden das erste und das zweite Kunststoff-Element 12, 14 einer Baugruppe zunächst derart zusammengefügt, dass die erste Anlagefläche 18 des ersten Kunststoff-Elements 12 an die zweite Anlagefläche 22 des zweiten Kunststoff-Elements 14 angelegt wird. Anschließend werden die Öffnungen 16 über das die Öffnungs-Eintrittfläche 20 durchdringende Öffnungs-Ende der Öffnung 16 vollständig mit Klebstoff 26 aufgefüllt. Ferner wird auf die bereits gefüllte Öffnung 16 und die Öffnungseintritts-Fläche 20 - und zwar in einer an die Öffnung 16 angrenzenden Umgebung - weiterer Klebstoff 26 aufgetragen, um den dargestellten zusammenhängenden bzw. einstückig ausgebildeten Klebstoffpilz zu bilden. Anschließend erfolgt die Aushärtung des Klebstoffs 26. Die so durch das erfindungsgemäße Verfahren geschaffene Klebstoff-Verbindung 24 ist durch eine hohe Haftungskraft gekennzeichnet. Durch die bereitgestellte Klebstoffpilz-Form wird die Haftungskraft infolge der zusätzlichen Haftung von Klebstoff 26 in Form eines "Klebstoff-Bunds" auf der Öffnungseintritts-Fläche 20 deutlich erhöht. Erfindungsgemäß kann ein Klebstoff 26 in Form eines Schmelzklebers vorgesehen sein.

Das erfindungsgemäße Verfahren zur Herstellung der Klebstoff-Verbindung 24 zeichnet sich dadurch aus, dass im Unterschied zu bekannten Lösungen kein großflächiges Bestreichen von Klebeflächen erforderlich ist. Der Klebstoff 26 kann erfindungsgemäß gezielt und schnell aufgetragen werden, wobei insbesondere eine genaue Positionierung der zu verklebenden Kunststoff-Elemente 12, 14 vor der Verklebung möglich ist.

Bei dem in Fig.1 dargestellten Längsschnitt des zweiten Ausführungsbeispiels des erfindungsgemäßen Kunststoffbauteils 10 weisen die Öffnungen einen Abschnitt 28 auf, der eine sich in Richtung der ersten Anlagefläche 18 zunehmende Querschnittsfläche aufweist. Durch den in Form eines Hinterschnitts ausgebildeten Abschnitt 28 entsteht neben dem durch den Klebstoff 26 hergestellten Stoffschluss zusätzlich ein Formschluss, einhergehend mit einer wesentlichen Erhöhung der Abzugskraft zur Trennung der beiden Kunststoff-Elementen12, 14.

Versuche mit einer Zugprüfmaschine haben ferner ergeben, dass mittels des bereitgestellten Hinterschnitts die Abzugs-Scherkräfte - also die Kräfte bis zu denen die Verbindung einer Scherbeanspruchung standhält, bei der auf die beiden Kunststoff-Elemente 12, 14 ein parallel zu den Anlageflächen 18, 22 gerichtetes, entgegengesetzt orientiertes Kräfte-Paar einwirkt - gegenüber einen herkömmlichen Verbindung deutlich- um bis zu ca. 40 % - erhöht sind.

Die ebenfalls mittels des erfindungsgemäßen Verfahrens aus erfindungsgemäßen Baugruppen hergestellten und in Fig. 2 dargestellten drei Kunststoffbauteile 10 weisen erste Kunststoff-Elemente 12 mit durchdringenden Öffnungen 16 mit kreisförmigem Querschnitt auf, die geradlinig hintereinander angeordnet sind. Auch bei diesen Ausführungsbeispielen besteht eine hohe Haftungskraft zwischen den beiden durch die erfindungsgemäße Klebstoff-Verbindung 24 miteinander verbundenen Kunststoff-Elementen 12, 14. Bei dem mittleren Längsschnitt eines der drei Ausführungsbeispiele der Fig. 2 ist ein Hinterschnitt in Form eines Öffnungs-Abschnitts 28 vorgesehen, durch den ein Formschluss ermöglicht wird, einhergehend mit einer wesentlichen Erhöhung der Abzugskraft zur Trennung der beiden Kunststoff-Elementen 12, 14. Auch bei dem in Fig.2 unten dargestellten Längsschnitt des dritten Ausführungsbeispiels des erfindungsgemäßen Kunststoffbauteils 10 weisen die Öffnungen 16 eine in Richtung der ersten Anlagefläche 18 zunehmende Querschnittsfläche auf. Eine so ausgebildete Öffnung kann einfach hergestellt werden und führt zu einer hohen Haftungskraft zwischen den beiden Bauteilen.

Die erfindungsgemäße Lehre ist insbesondere für die Herstellung von Automobil-Kunststoff-Bauteilen geeignet, die vorzugsweise im Außenbereich Anwendung finden, wie z.B. Heckspoiler, Radverbreiterungen, Schweller, Türunterkanten, etc.

### Bezugszeichenliste

- 10: Kunststoffbauteil
- 12: Kunststoff-Element
- 14: Kunststoff-Element
- 16: Öffnung
- 18: Anlagefläche
- 20: Öffnungs-Eintrittsfläche
- 22: Anlagefläche
- 24: Klebstoff-Verbindung
- 26: Klebstoff
- 28: Öffnungs-Abschnitt

## Patentansprüche

1. Verfahren zur Verbindung wenigstens eines ersten Kunststoff-Elements (12) mit wenigstens einem zweiten Kunststoff-Element (14), wobei das erste Kunststoff-Element (12) wenigstens eine erste Anlagefläche (18) und das zweite Kunststoff-Element (14) wenigstens eine zweite Anlagefläche (22) aufweist, und wobei das erste Kunststoff-Element (12) wenigstens eine das erste Kunststoff-Element (12) und die erste Anlagefläche (18) durchdringende Öffnung (16) aufweist, bei dem in einem ersten Schritt die erste Anlagefläche (18) an die zweite Anlagefläche (22) angelegt wird, und bei dem in einem zweiten Schritt in die Öffnung (16) ein Klebstoff (26) eingebracht wird, wobei der Klebstoff (26) nach dem Einbringen einen Kontakt zu dem ersten Kunststoff-Element (12) und der zweiten Anlagefläche (22) aufweist und eine Klebstoff-Verbindung (24) zwischen dem ersten und dem zweiten Kunststoff-Element (12, 14) schafft.

2. Verfahren nach Anspruch 1, **dadurch gekennzeichnet, dass** die Öffnung (16) vollständig mit dem Klebstoff (26) aufgefüllt wird.

3. Verfahren nach Anspruch 1, **dadurch gekennzeichnet, dass** das erste Kunststoff-Element (12) wenigstens eine Öffnungseintrifts-Fläche (20) aufweist, von der sich die Öffnung (16) bis hin zur der wenigstens einen ersten Anlagefläche (18) erstreckt, wobei die Öffnung (16) vorzugsweise vollständig mit dem Klebstoff (26) aufgefüllt wird, und wobei ferner nach dem Einbringen des Klebstoffs die Öffnung (16) und ein an die Öffnung (16) angrenzender Bereich der Öffnungseintritts-Fläche (20) mit weiterem Klebstoff (26) bedeckt werden.

4. Verfahren nach einem der vorangehenden Ansprüche, **dadurch gekennzeichnet, dass** die Öffnung (16) einen kreisförmigen Querschnitt aufweist.

5. Verfahren nach einem der Ansprüche 1 bis 4, **dadurch gekennzeichnet, dass** die Öffnung (16) in Form eines Langlochs ausgebildet ist.

6. Verfahren nach einem der vorangehenden Ansprüche, **dadurch gekennzeichnet, dass** die Öffnung (16) zwei unterschiedlich ausgebildete Abschnitte aufweist, wobei einer der beiden Abschnitte eine größere Querschnittsfläche aufweist, und wobei sich der Abschnitt mit der größeren Querschnittsfläche vorzugsweise bis zu der ersten Anlagefläche (18) erstreckt.

7. Verfahren nach einem der Ansprüche 1 bis 5, **dadurch gekennzeichnet**, das die Öffnung (16) einen Abschnitt (28) aufweist, der eine in Richtung der ersten Anlagefläche (18) zunehmende Querschnittsfläche aufweist, wobei sich der Abschnitt vorzugsweise bis zu der ersten Anlagefläche (18) erstreckt.

8. Verfahren nach Anspruch 7, **dadurch gekennzeichnet, dass** der Abschnitt (28) in Form eines Kegelstumpfs ausgebildet ist.

9. Verfahren nach einem der Ansprüche 1 bis 5**, dadurch gekennzeichnet, dass** die Öffnung (16) eine in Richtung der ersten Anlagefläche (18) zunehmende Querschnittsfläche aufweist.

10. Baugruppe zur Bildung eines Kunststoffbauteils (10), mit wenigstens einem ersten Kunststoff-Element (12) und wenigstens einem zweiten Kunststoff-Element (14), wobei das erste Kunststoff-Element (12) wenigstens eine erste Anlagefläche (18) und das zweite Kunststoff-Element (14) wenigstens eine zweite Anlagefläche (22) aufweist, und wobei die erste Anlagefläche (18) dafür vorgesehen ist, an die zweite Anlagefläche (22) angelegt zu werden, und wobei das erste Kunststoff-Element (12) wenigstens eine das erste Kunststoff-Element (12) und die erste Anlagefläche (18) durchdringende Öffnung (16) aufweist, in die ein Klebstoff (26) einbringbar ist, wenn die erste Anlagefläche (18) an die zweite Anlagefläche (22) angelegt ist, wobei der Klebstoff (26) nach dem Einbringen einen Kontakt zu dem ersten Kunststoff-Element (12) und der zweiten Anlagefläche (22) aufweist, um zur Bildung des Kunststoffbauteils (10) eine Klebstoff-Verbindung (24) zwischen dem ersten und dem zweiten Kunststoff-Element (12, 14) zu schaffen.

11. Baugruppe nach Anspruch 10, **dadurch gekennzeichnet, dass** die Öffnung (16) einen kreisförmigen Querschnitt aufweist.

12. Baugruppe nach Anspruch 10**, dadurch gekennzeichnet, dass** die Öffnung (16) in Form eines Langlochs ausgebildet ist.

13. Baugruppe nach einem der vorangehenden Ansprüche, **dadurch gekennzeichnet, dass** die Öffnung (16) wenigstens zwei unterschiedlich ausgebildete Abschnitte aufweist, wobei einer der beiden Abschnitte eine größere Querschnittsfläche aufweist, und wobei sich der Abschnitt mit der größeren Querschnittsfläche vorzugsweise bis zu der ersten Anlagefläche (18) erstreckt.

14. Baugruppe nach einem der Ansprüche 10 bis 12, **dadurch gekennzeichnet, das** die Öffnung (16) einen Abschnitt (28) aufweist, der eine sich in Richtung der ersten Anlagefläche zunehmende Querschnittsfläche aufweist, wobei sich der Abschnitt vorzugsweise bis zu der ersten Anlagefläche (18) erstreckt.

15. Baugruppe nach Anspruch 14, **dadurch gekennzeichnet, dass** der Abschnitt (28) in Form eines Kegelstumpfs ausgebildet ist.
